# EUROPÄISCHE PATENTSCHRIFT

(11) **EP 0 940 510 B1**
(45) Veröffentlichungstag und Bekanntmachung des Hinweises auf die Patenterteilung: **04.06.2003**
(21) Anmeldenummer: 98103841.7
(22) Anmeldetag: 04.03.1998
(51) Int. Cl.: E03D 11/02, E03D 5/012

(54) **Toiletteneinheit**
Toilet unit
Ensemble de toilettes

(43) Veröffentlichungstag der Anmeldung: 08.09.1999
(73) Patentinhaber: Dometic GmbH, 57074 Siegen (DE)
(72) Erfinder: Giesler, Rolf-Dieter, 57223 Kreuztal (DE); Lorek, Manfred, 57074 Siegen (DE)
(74) Vertreter: Herrmann-Trentepohl, Werner, Dipl.-Ing.

(56) Entgegenhaltungen:
- FR-A- 2 246 699
- US-A- 4 041 554
- US-A- 4 710 988

## Beschreibung

Die Erfindung betrifft eine Toiletteneinheit, umfassend einen KunststoffGrundkörper, einen Toilettensitz und eine Toilettenschüssel mit einem kunststoffträger, nach dem Gattungsbegriff des Anspruchs 1.

Dokument US 4,041,554 offenbart eine Toiletteneinheit, wobei die Toilettensehüssel im wesentlichen aus einem gestanzten Stahlteil besteht, das mit chemikalienbeständigen Materialien beschichtet ist.

Dokument FR 2,246,699 offenbart eine Toiletteneinheit mit den Merkmalen des Oberbegriffs des Anspruchs 1.

Derartige Toiletteneinheiten sind seit längerem bekannt und in der Praxis, beispielsweise als Campingtoiletten in mobilen Fahrzeugen, wie Wohnwagen und Booten, oder als tragbare Toiletten gebräuchlich. Bei solchen Toiletten sind die Toilettenschüssel wie auch die meisten anderen Teile zur Gewichtsersparnis aus für den Sanitäreinsatz geeignetem Kunststoff gefertigt. Diese Materialien sind preiswert, da sie sich mittels herkömmlicher Spritzgußverfahren oder sonstiger Formverfahren leicht herstellen lassen. Sie besitzen darüber hinaus ein geringes Gewicht, sind relativ robust und pflegeleicht.

Die Kunststoffteile genügen jedoch infolge der begrenzten Chemikalien- und Lichtbeständigkeit und einer gewissen Alterung des Kunststoffs auf die Dauer nur bedingt höheren hygienischen Ansprüchen. Eine Verbesserung der Toilette im Hinblick auf eine verbesserte Hygiene darf jedoch nicht dazu führen, daß die Toilette insgesamt wesentlich verteuert wird. Eine weitere Forderung besteht deshalb darin, daß die Toiletteneinheit einfach aufgebaut ist und ohne hohe Anforderungen an die Paßgenauigkeit der einzelnen Teile leicht herstellbar ist und eine sichere Funktion ihrer Betätigungseinrichtungen gewährleistet wird.

Diese Aufgabe wird durch eine Toiletteneinheit mit den Merkmalen des Anspruchs 1 gelöst. Weitere vorteilhafte Merkmale ergeben sich aus den Unteransprüchen. Die Erfindung schließt den Gedanken ein, den der Benutzung ausgesetzten und für den Benutzer sichtbaren Teil der Toilettenschüssel aus einem gegenüber Kunststoff für den Sanitärbereich besser geeigneten Material auszuführen, ohne daß dabei die entscheidenden Vorteile des Kunststoff-Aufbaus preisgegeben werden, d. h. insbesondere ohne eine wesentliche Gewichtszunahme zuzulassen. Dieser Gedanke wird durch einen mehrteiligen bzw. mehrschichtigen mechanisch stabilen Aufbau der Toilettenschüssel realisiert.

In einer Ausführungsform, die höchsten hygienischen und ästhetischen Ansprüchen genügt, besteht der sichtbare Teil der Toilettenschüssel aus Porzellan oder glasierter Keramik. In einer abgewandelten Ausführungsform, die noch zusätzliche gestalterische Möglichkeiten bietet, besteht der sichtbare Teil der Toilettenschüssel aus durchgefärbtem, technischem Glas mit erhöhter Bruchfestigkeit. Bei diesen Ausführungen umfaßt die Toilettenschüssel einen mechanisch stabilen Kunststoffträger in der Grundform der Toilettenschüssel und ein vollständig aus fäkalien-, reinigungsmittel- und lichtbeständigem nicht-polymerem, im wesentlichen porenfreien Material bestehendes dünnwandiges Einsatzteil, das in den Kunststoffträger eingesteckt und mit diesem verklebt oder durch Montageschaum verbunden ist. Bei dieser Ausführung werden in vorteilhafter Weise ein Toleranzausgleich bei der Herstellung und eine Verbesserung der Bruchfestigkeit sowie eine Geräuschdämmung im Gebrauch erreicht. Der Toleranzausgleich zwischen Einsatzteil und dem Kunststoffträger läßt zu, daß das Einsatzteil nicht maßgenau gefertigt werden muß, so daß hier erhebliche Kosten eingespart werden können.

In vorteilhafter Weise kann darüber hinaus das Einsatzteil im Bereich seiner unteren Öffnung durch eine Lippendichtung gegen den Kunststoffträger abgedichtet, aber auch gleichzeitig fixiert sein. Dadurch wird eine Verunreinigung des Zwischenraums zwischen den beiden Teilen der Toilettenschüssel und daraus u. U. erwachsende Geruchsbelästigungen ausgeschlossen.

Bei einem weiteren Ausführungsbeispiel kann der sichtbare Teil der Toilettenschüssel aus korrosionsfestem oder mit einer porenfreien Beschichtung versehenen Metallblech bestehen, das beispielsweise aus Edelstahl oder emailliertem Stahlblech besteht und in den Kunststoffträger eingesetzt ist. Auch in diesem Fall ist ein Einschäumen oder Einkleben in den stabilisierenden Träger vorgesehen.

Bei allen Ausführungen ist bevorzugt der obere Rand des Einsatzteils mit radialem und vertikalem Spiel und somit spannungsfrei in Bereich des Toilettensitzes in einer ringförmigen Kunststoffabdeckung aufgenommen, die den mehrteiligen Aufbau der Toilettenschüssel abdeckt. Der Kunststoffträger bzw. der Grundkörper sind im Bereich der Oberkante der Toilettenschüssel gegenüber dem Einsatzteil radial überstehend ausgeführt, so daß eine umlaufende Auflage für den Toilettensitz oder die Kunststoffabdeckung gebildet wird und somit das Gewicht des Benutzers bei der Benutzung der Toilette aufgenommen wird. Hierdurch wird eine hohe mechanische Wechselbelastung der Toilettenschüssel durch den Benutzer der Toilette in vorteilhafter Weise vermieden.

Der Gegenstand der Erfindung ist vorteilhaft einsetzbar bei modernen Campingtoiletten, wie sie z. B. bei Caravans, Segelbooten und/oder Ferienhäusern eingesetzt werden. Diese Toiletten verfügen über einen Reinwassertank oder einen Wasseranschluß und einer daran angeschlossenen Düsenanordnung zum Spülen der Toilettenschüssel, die mindestens eine Mehrzahl von im Bereich der Oberkante der Toilettenschüssel angeordneten Düsen (und bei bestimmten Ausführungen auch Düsen im Auflagebereich) aufweisen. Sie ist insbesondere auch einsetzbar zur weiteren Gebrauchswerterhöhung von Vakuumtoiletten, die ohnedies von Benutzern mit höheren hygienische Ansprüchen bevorzugt werden.

Hierbei sind die im Bereich der Oberkante der Toilettenschüssel angeordneten Düsen zweckmäßigerweise getrennt vom Einsatzteil in der Kunststoffabdeckung angebracht. Für die Ausführung der Erfindung bei einer Vakuumtoilette ist der Abdichtung im Bereich des Absaugventils besondere Aufmerksamkeit zu schenken.

Um den hohen Ansprüchen hinsichtlich der Hygiene zu genügen, dennoch aber den Preis der Toilette möglichst niedrig zu halten, ist in vorteilhafter Weise vorgesehen, daß die Steuereinheit für die Wasserzufuhr bzw. die Verschlußeinheit der Toilettenschüssel am unteren Bereich des Einsatzteils durch eine gemeinsame Betätigungseinrichtung steuerbar sind. Diese Betätigungseinrichtung kann in vorteilhafter Weise von einer Pedalbetätigungseinrichtung gebildet sein, welche eine Ventileinheit zur Steuerung der Spülflüssigkeits-Versorgungseinrichtung sowie den Verschlußkörper für die Toilettenschüssel steuert, der vorteilhaft von einem Kugelsegment gebildet sein kann. Alle Einrichtungen sind in vorteilhafter Weise in einem Sockelteil der Toiletteneinheit angeordnet, auf dessen Oberseite die Toilettenschüssel um ihre senkrechte Achse drehbar gelagert ist. Die drehbare Lagerung besitzt den Vorteil, daß man z. B. bei engen Platzverhältnissen die nach vorne auskragende Toilettenschüssel zur Seite drehen kann, wenn sie nicht benötigt wird. Die Toilettenschüssel ist dabei in vorteilhafter Weise gegenüber dem Sockelteil mittels einer Arretierungsvorrichtung feststellbar, so daß die Stabilität bei Benutzung der Toilette erhöht wird. Alternativ kann die Verdrehbarkeit auch nur zum Zwecke einer besseren Einstellbarkeit für den Einbau der Toilette in unterschiedliche Räume vorgesehen sein, so daß dadurch der Einsatzbereich der Toiletteneinheit wesentlich erhöht wird. Zu einer Erweiterung der Einsatzmöglichkeiten dient auch eine variable Gestaltung des Ablaufs, der wahlweise mit einem von mehreren im Winkel zueinander vorgesehenen und mit dem Fäkalientank versehenen Anschlußkanälen verbindbar ist. Der Zulauf aus der Toilettenschüssel in den Ablauf ist dabei in vorteilhafter Weise trichterförmig ausgebildet, wobei dies insbesondere für eine optimale Dimensionierung der Querschnitte bei Vakuumtoiletten vorteilhaft ist.

Weitere Merkmale, Vorteile und Einzelheiten ergeben sich aus der nachfolgenden Beschreibung eines bevorzugten Ausführungsbeispiels anhand der Zeichnung. Darin zeigen:
- Fig. 1: eine schematische Querschnittsansicht des Aufbaus einer Toiletteneinheit gemäß der Erfindung;
- Fig. 2: eine schematische Längsschnittansicht des Aufbaus der Toiletteneinheit nach Fig. 1, und
- Fig. 3: eine schematische Darstellung der Pedalbetätigungseinrichtung für die Ventileinheit der Spülflüssigkeits-Versorgungseinrichtung sowie den Verschlußkörper für die Toilettenschüssel.

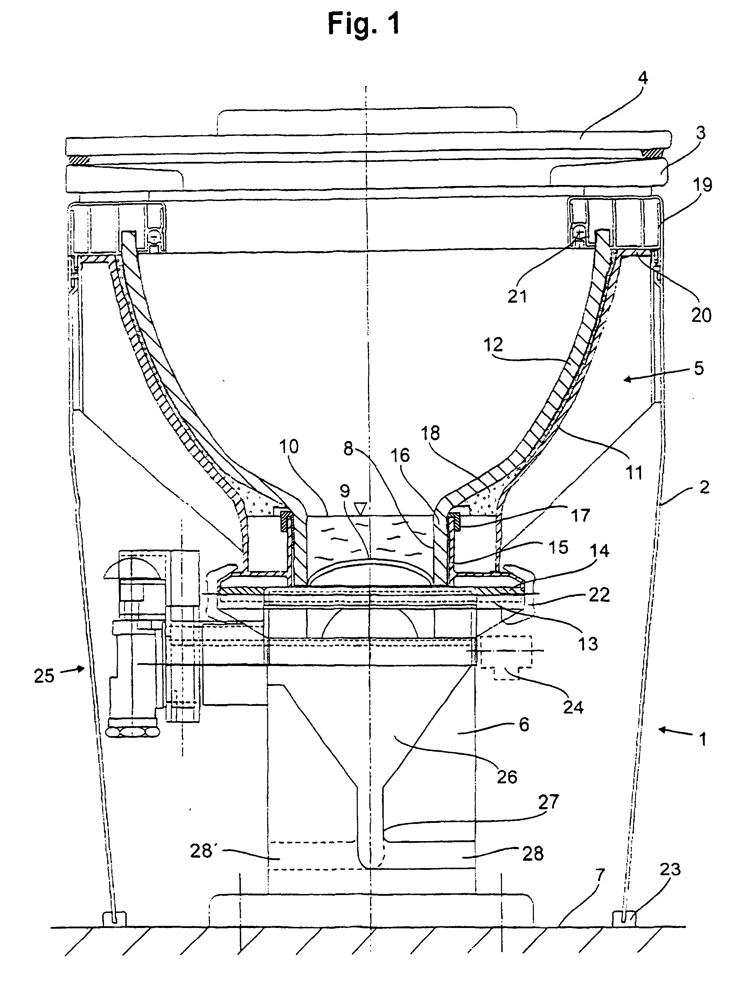

Die in der Fig. 1 gezeigte Toiletteneinheit 1 umfaßt einen Kunststoffgrundkörper 2, einen Toilettensitz 3 mit einem Deckel 4 und eine Toilettenschüssel 5. Die Toilettenschüssel 5 ist auf einem Sockel 6 drehbar gelagert. Der Sockel 6 ist auf dem Boden der Toilette 7 befestigt.

Wie aus der Fig. 1 ferner zu entnehmen ist, ist die Toilettenschüssel 5 an ihrem unteren Ende mit einem Ablauf 8 ausgestattet, der durch eine Verschlußeinrichtung verschließbar ist. Diese Verschlußeinrichtung kann von einem Kugelsegment gebildet sein, welches das untere Ende der Toilettenschüssel 5 unter Zwischenlagerung von nicht dargestellten Dichtungsmitteln abdichtet, so daß über der Verschlußeinrichtung 9 ein Wasserpegel 10 permanent aufrechterhalten wird, wenn sich die Toilette nicht im Gebrauch befindet. Der Wasserpegel zeigt zur Kontrolle die Dichtheit der Toilette an, sorgt aber auch gleichzeitig für eine geruchsfreie Abdichtung zum Fäkalientank.

Die Toilettenschüssel 5 ist im vorliegenden Falle zweiteilig ausgebildet und besitzt einen Kunststoffträger 11 sowie ein vollständig aus dem fäkalien-, reinigungsmittel- und lichtbeständigen nicht-polymeren, im wesentlichen porenfreien Material bestehendes dünnwandiges Einsatzteil 12. Der Kunststoffträger 11 besitzt an seinem unteren Auflageende, mit welchem er auf einem Flansch 13 des Sockels 6 unter Einschluß einer Dichtung 14 aufliegt, einen Zylinderabschnitt 15, welcher zur Aufnahme eines konzentrischen Abschnitts 16 des Einsatzteils 12 unter Einlage einer Lippendichtung 17 dient.

Das z. B. aus Porzellan bestehende Einsatzteil 12 ist mittels PU-Montageschaum 18 in den Träger 11 eingeschäumt. Das Porzellaneinsatzteil 12 steht auch dann über dem - nach Einsetzen in den Kunststoffträger 11 eingebrachten und ausgehärteten - Montageschaum 18 vollflächig in mechanischen Kontakt mit dem Kunststoffträger, wenn seine Außengestalt mit der Innenform des Trägers infolge von Fertigungstoleranzen nicht exakt korrespondiert. Auf das Einsatzteil 12 einwirkende Kräfte, wie sie etwa bei intensiver mechanischer Reinigung oder beim versehentlichen Hineinfallen eines Gegenstands in die Toilette auftreten können, werden dadurch im wesentlichen auf den stabilen Kunststoffträger 11 abgeleitet, so daß die Bruchfestigkeit des Einsatzteils trotz seiner Dünnwandigkeit den Anforderungen genügt. Zur Erzielung dieses Effekts ist das Einsatzteil 12 bewußt etwas kleiner dimensioniert als die Träger-Innenform, so daß es praktisch vollständig in Montageschaum eingebettet ist.

Das obere Ende des Einsatzteils 12 ragt in eine korrespondierende ringförmige Ausnehmung der Abdeckung 19 des Kunststoffgrundkörpers 2 hinein und hat dort etwas Spiel in vertikaler Richtung. Eine bei Benutzung der Toiletteneinheit 1 auf den Sitz 3 ausgeübte und auf die Abdeckung 19 übertragene Druckkraft wird hierdurch von dem Einsatzteil 12 ferngehalten und weiter auf den horizontal verlaufenden Oberkantenabschnitt des hochbelastbaren Kunststoffträgers 11 abgeleitet.

An der der Toilettenschüssel 5 zugewandten Unterseite der Abdeckung 19 ist in diese die Düsenanordnung 21 eingebettet. Hierdurch wird erreicht, daß beim Spülen die gesamte sichtbare Oberfläche der Toilettenschüssel benetzt werden kann.

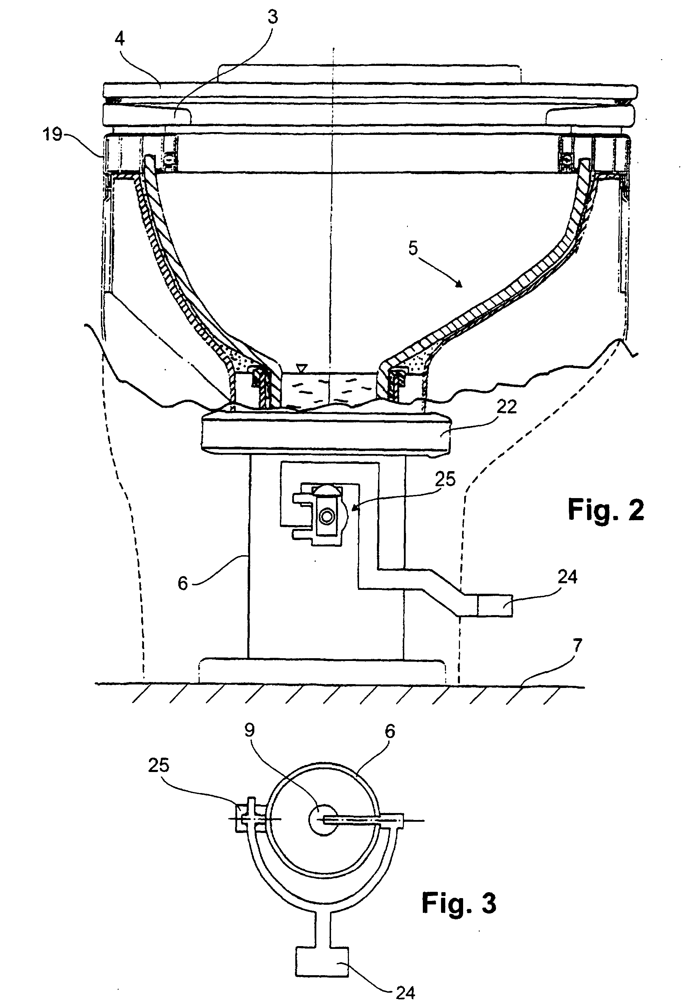

Zur Befestigung der drehbaren Toilettenschüssel 5 auf dem Sockel 6 ist eine Arretierungsvorrichtung 22 vorgesehen, bei welcher es sich um eine Spannvorrichtung handeln könnte, die mittels Klemmwirkung die Toilettenschüssel unter Einlagerung der Dichtung 14 auf dem Flansch 13 des Sockels 6 festklemmt. Eine solche Einrichtung ist vorzugsweise dann vorgesehen, wenn die Toilettenschüssel 5 nur zu Montagezwecken in eine bestimmte Position gebracht werden soll, um dann einen festen Sitz einzunehmen. Es ist jedoch auch denkbar, daß Federeinrichtungen vorgesehen sind, die einen ausreichenden Halt der Toilettenschüssel auf dem Flansch 13 des Sockels 6 gewährleisten, jedoch eine Beweglichkeit in Drehrichtung um die vertikale Achse der Toilettenschüssel ermöglichen, so daß die Toilettenschüssel aus einer Gebrauchslage in eine Nicht-Gebrauchslage verschwenkbar ist. Zu diesem Zweck kann der Kunststoffgrundkörper 2 mittels Dichtungen 23 auf dem Boden 7 mit verdrehbar sein und in seiner Vorderseite eine entsprechende Aussparung aufweisen, die die Verdrehung gegenüber einer ortsfesten Pedaleinrichtung 24 (siehe Fig. 2) zuläßt. Mittels dieser Pedaleinrichtung 24, die den Sockel 6 gabelförmig umgreift, kann gleichzeitig eine an der Seite des Sockels 6 angebrachte Ventileinheit 25 betätigt werden, über welche die Düsenanordnung 21 mit Spülwasser versorgt wird. Die gabelförmige Pedaleinrichtung 24 bedient aber auch gleichzeitig die Verschlußeinrichtung 9, die beim Heruntertreten des Pedals zur Seite geschwenkt wird.

Wie aus der Fig. 1 ferner zu entnehmen ist, ist der Ablauf 26 trichterförmig ausgebildet, wobei der Trichter in einen Stutzen 27 mündet, welcher wahlweise mit einem von mehreren im Winkel zueinander vorgesehenen und mit dem Fäkalientank (nicht dargestellt) über Anschlußkanäle 28, 28' verbindbar ist.

Die Erfindung beschränkt sich in ihrer Ausführung nicht auf die vorstehend angegebenen bevorzugten Ausführungsbeispiele. Vielmehr ist eine Anzahl von Varianten möglich, welche von der dargestellten Lösung auch in anders gearteten Ausführungen Gebrauch macht. So kann abweichend von der oben beschriebenen Ausführungsform mit mehrteiligem Aufbau der Toilettenschüssel das Einsatzteil auch in den Träger eingeklebt sein.

## Patentansprüche

1. Toiletteneinheit (1), umfassend einen Kunststoffgrundkörper (2), einen Toilettensitz (3) und eine Toilettenschüssel (5), wobei die Toilettenschüssel (5) einen Kunststoffträger (11) aufweist,
**dadurch gekennzeichnet, dass,**
die Toilettenschüssel (5) ferner ein vollständig aus einem fäkalien-, reinigungsmittel- und lichtbeständigen, nicht-polymeren, im Wesentlichen porenfreien Material bestehendes dünnwandiges Einsatzteil (12) aufweist, welches der der Benutzung ausgesetzte und für den Benutzer in Gebrauchsstellung sichtbare Teil der Toilettenschüssel ist, wobei das dünnwandige Einsatzteil (12) in den Kunststoffträger (11) eingesteckt und mit diesem verklebt oder durch Montageschaum verbunden ist.

2. Toiletteneinheit nach Anspruch 1, **dadurch gekennzeichnet, dass** das Einsatzteil (12) im Bereich einer in Gebrauchsstellung unteren Öffnung (8) desselben durch eine Dichtung (14), insbesondere eine Lippendichtung gegen den Kunststoffträger (11) abgedichtet ist.

3. Toiletteneinheit nach Anspruche 1 oder 2, **dadurch gekennzeichnet, dass** ein in Gebrauchsstellung oberer Rand des Einsatzteils (12) der Toilettenschüssel (5), insbesondere mit vertikalem Spiel, im Bereich des Toilettensitzes in oder an einer ringförmigen Kunststoffabdeckung (19) aufgenommen ist.

4. Toiletteneinheit nach einem der Ansprüche 1 bis 3, **dadurch gekennzeichnet, dass** der Kunststoffträger (11) und/oder der Kunststoff-Grundkörper (2) im Bereich der in Gebrauchsstellung Oberkante der Toilettenschüssel (5) gegenüber dem Einsatzteil (12) der Toilettenschüssel radial überstehend ausgeführt ist, so dass er eine umlaufende Auflage für den Toilettensitz (3) bildet.

5. Toiletteneinheit nach einem der Ansprüche 1 bis 4, **dadurch gekennzeichnet, dass** der sichtbare Teil der Toilettenschüssel (5) aus Porzellan oder glasierter Keramik besteht.

6. Toiletteneinheit nach einem der Ansprüche 1 bis 4, **dadurch gekennzeichnet, dass** der sichtbare Teil der Toilettenschüssel (5) aus durchgebfärbtem Glas besteht.

7. Toiletteneinheit nach einem der Ansprüche 1 bis 4, **dadurch gekennzeichnet, dass** der sichtbare Teil der Toilettenschüssel (5) aus korrosionsfestern oder mit einer korrosionsfesten, porenfreien Beschichtung versehenem Metallblech besteht.

8. Toiletteneinheit nach Anspruch 1, **dadurch gekennzeichnet, dass** die Toiletteneinheit eine Flüssigkeitsspülung umfasst und der sichtbare Teil der Toilettenschüssel (5) über einen Ablauf (8, 26) mit einem Fäkalientank verbunden ist.

9. Toiletteneinheit nach Anspruch 8, **gekennzeichnet durch** einen Reinwassertank und/oder einen Frischwasseranschluss, eine mit dem Reinwassertank und/oder Frischwasseranschluss (25) verbundene Düsenanordnung (21) zum Spülen der Toilettenschüssel (5), wobei die Düsenanordnung (21) mindestens eine Mehrzahl von im Bereich der in Gebrauchsstellung Oberkante der Toilettenschüssel angeordneten Düsen aufweist.

10. Toiletteneinheit nach Anspruch 9, **dadurch gekennzeichnet, dass** die im Bereich der in Gebrauchsstellung Oberkante der Toilettenschüssel (5) angeordneten Düsen getrennt vom Einsatzteil (12) der Toilettenschüssel (5) in einer Kunststoffabdeckung (19) angebracht sind.

11. Toiletteneinheit nach wenigstens einem der vorhergehenden Ansprüche 8 bis 10, **dadurch gekennzeichnet, dass** am Ablauf (8) der Toilettenschüssel (5) ein Ventilkörper (9), insbesondere ein Kugelsegment, zum Verschließen des Ablaufs (8) vorgesehen ist.

12. Toiletteneinheit nach wenigstens einem der vorhergehenden Ansprüche 8 bis 11, **dadurch gekennzeichnet, dass** der das Einsatzteil (12) aufnehmende Kunststoff-Grundkörper (2) in Gebrauchsstellung auf einem Sockelteil (6) um seine senkrechte Achse verdrehbar gelagert ist.

13. Toiletteneinheit nach Anspruch 12, **dadurch gekennzeichnet, dass** der Kunststoff-Grundkörper (2) gegenüber dem Sockelteil (6) mittels einer Arretierungsvorrichtung (22) feststellbar ist.

14. Toiletteneinheit nach Anspruch 11, **dadurch gekennzeichnet, dass** der Ventilkörper (9) in dem Sockelteil (6) um eine in Gebrauchsstellung horizontale Achse verdrehbar gelagert ist.

15. Toiletteneinheit nach wenigstens einem der Ansprüche 12 bis 14 in Kombination mit Anspruch 9, **dadurch gekennzeichnet, dass an** dem Sockelteil (6) eine durch eine Ventileinheit (25) steuerbare Spülflüssigkeits-Versorgungseinrichtung vorgesehen ist, welche mit der Düsenanordnung (21) zum Spülen der Toilettenschüssel (5) in Verbindung steht.

16. Toiletteneinheit nach Anspruch 15 in Kombination mit Anspruch 11, **dadurch gekennzeichnet, dass** an dem Sockelteil (6) eine schwenkbar gelagerte Betätigungseinrichtung (24), insbesondere eine Pedalbetätigungseinrichtung, vorgesehen ist, mit welcher die Spülflüssigkeits-Versorgungseinrichtung (25) und das Kugelsegment (9) zum Verschließen der Toilettenschüssel (5) gleichzeitig betätigbar sind.

17. Toiletteneinheit nach wenigstens einem der vorhergehenden Ansprüche 8 bis 16, **dadurch gekennzeichnet, dass** die Toilettenschüssel (5) mit ihrem in Gebrauchsstellung unteren Ende in den wenigstens in seinem oberen Bereich trichterförmig ausgebildeten Ablauf (26) einmündet.

18. Toiletteneinheit nach wenigstens einem der vorhergehenden Ansprüche 8 bis 17, **dadurch gekennzeichnet, dass** der Ablauf (26) wahlweise mit einem von mehreren im Winkel zueinander vorgesehenen und mit dem Fäkalientank verbundenen Anschlusskanälen (28, 28') verbindbar ist.

## Claims

1. Toilet unit (1) comprising a plastics base (2), a toilet seat (3) and a toilet bowl (5), the toilet bowl (5) having a plastics carrier (11), **characterised in that** the toilet bowl (5) further has a thin-walled insert element (12) which is composed completely of a faeces-, detergent-and light-resistant, non-polymer, substantially non-porous material and which is the portion of the toilet bowl that is exposed to use and is visible to the user in the position of use, the thin-walled insert element (12) being inserted into the plastics carrier (11) and being adhesively bonded thereto or connected thereto by polyurethane foam.

2. Toilet unit according to claim 1, **characterised in that** the insert element (12) is sealed in the region of a lower opening (8) thereof in the position of use by a seal (14), in particular a lip seal, against the plastics carrier (11).

3. Toilet unit according to claim 1 or 2, **characterised in that** an upper edge of the insert element (12) of the toilet bowl (5) in the position of use is received, in particular with vertical play, in the region of the toilet seat in or on an annular plastics cover (19).

4. Toilet unit according to any one of claims 1 to 3, **characterised in that** the plastics carrier (11) and/or the plastics base (2) is produced in the region of the upper edge of the toilet bowl (5) in the position of use to project radially relative to the insert element (12) of the toilet bowl so that it forms a surrounding support for the toilet seat (3).

5. Toilet unit according to any one of claims 1 to 4, **characterised in that** the visible portion of the toilet bowl (5) is composed of porcelain or a glazed ceramic material.

6. Toilet unit according to any one of claims 1 to 4, **characterised in that** the visible portion of the toilet bowl (5) is composed of coloured glass.

7. Toilet unit according to any one of claims 1 to 4, **characterised in that** the visible portion of the toilet bowl (5) is composed of sheet metal which is corrosion-resistant or which is provided with a corrosion-resistant, non-porous coating.

8. Toilet unit according to claim 1, **characterised in that** the toilet unit comprises a fluid flushing system and the visible portion of the toilet bowl (5) is connected to a faeces tank via an outlet (8, 26).

9. Toilet unit according to claim 8, **characterised by** a pure water tank and/or a fresh water connection, a nozzle arrangement (21), which is connected to the pure water tank and/or fresh water connection (25), for flushing the toilet bowl (5), the nozzle arrangement (21) having at least a plurality of nozzles arranged in the region of the upper edge of the toilet bowl in the position of use.

10. Toilet unit according to claim 9, **characterised in that** the nozzles, arranged in the region of the upper edge of the toilet bowl (5) in the position of use, are fitted in a plastics cover (19) separate from the insert element (12) of the toilet bowl (5).

11. Toilet unit according to at least one of the preceding claims 8 to 10, **characterised in that** a valve element (9), in particular a spherical segment, is provided at the outlet (8) of the toilet bowl (5) to close the outlet (8).

12. Toilet unit according to at least one of the preceding claims 8 to 11, **characterised in that** the plastics base (2), which receives the insert element (12), is mounted in the position of use on a base element (6) for rotation about the perpendicular axis thereof.

13. Toilet unit according to claim 12, **characterised in that** the plastics base (2) can be fixed relative to the base element (6) by means of a latch arrangement (22).

14. Toilet unit according to claim 11, **characterised in that** the valve element (9) is mounted in the base element (6) for rotation about a horizontal axis in the position of use.

15. Toilet unit according to at least one of the claims 12 to 14 in combination with claim 9, **characterised in that** there is provided on the base element (6) a flushing fluid supply device which is controllable by a valve unit (25) and which is connected to the nozzle arrangement (21) for the flushing of the toilet bowl (5).

16. Toilet unit according to claim 15 in combination with claim 11, **characterised in that** there is provided on the base element (6) a pivotably mounted activation device (24), in particular a pedal activation device, by means of which the flushing fluid supply device (25) and the spherical segment (9) for the closure of the toilet bowl (5) can be simultaneously activated.

17. Toilet unit according to at least one of the preceding claims 8 to 16, **characterised in that** the toilet bowl (5) opens, with its lower end in the position of use, out into the outlet (26) which is in the form of a funnel at least in its upper region.

18. Toilet unit according to at least one of the preceding claims 8 to 17, **characterised in that** the outlet (26) can be optionally connected to any one of several connection ducts (28, 28') which are provided at an angle to one another and which are connected to the faeces tank.

## Revendications

1. Ensemble de toilettes (1), comportant un corps de base en matière plastique (2), un siège de toilettes (3) et une cuvette de toilettes (5), dans lequel la cuvette de toilettes (5) présente un support en matière plastique (11),
**caractérisé en ce que**
la cuvette de toilettes (5) présente en outre un insert (12) à paroi mince constitué entièrement d'un matériau non polymère, essentiellement exempt de pores, résistant aux fèces, aux agents de nettoyage et à la lumière, qui représente la partie de la cuvette de toilettes exposée à l'utilisation et visible pour l'utilisateur en position d'utilisation, et qui est encastré dans le support en matière plastique (11) et collé ou lié à celui-ci à l'aide d'une mousse de montage.

2. Ensemble de toilettes selon la revendication 1, **caractérisé en ce que** l'insert (12) dans la zone de son ouverture inférieure (8) en position d'utilisation est rendu étanche au moyen d'un joint (14), en particulier un joint à lèvres, contre le support en matière plastique (11).

3. Ensemble de toilettes selon les revendications 1 ou 2, **caractérisé en ce qu'**un bord supérieur de l'insert (12) de la cuvette de toilettes (5) en position d'utilisation est logé, en particulier avec un jeu vertical, dans la zone du siège de toilettes, dans ou sur un couvercle en matière plastique de forme annulaire (19).

4. Ensemble de toilettes selon l'une quelconque des revendications 1 à 3, **caractérisé en ce que** le support en matière plastique (11) et/ou le corps de base en matière plastique (2) dans la zone du bord supérieur de la cuvette de toilettes (5) en position d'utilisation est réalisé de façon à déborder radialement de l'insert (12) de la cuvette de toilettes, de sorte qu'il forme un appui périphérique pour le siège de toilettes (3).

5. Ensemble de toilettes selon l'une quelconque des revendications 1 à 4, **caractérisé en ce que** la partie visible de la cuvette de toilettes (5) est constituée de porcelaine ou de céramique émaillée.

6. Ensemble de toilettes selon l'une quelconque des revendications 1 à 4, **caractérisé en ce que** la partie visible de la cuvette de toilettes (5) est constituée de verre coloré en profondeur.

7. Ensemble de toilettes selon l'une quelconque des revendications 1 à 4, **caractérisé en ce que** la partie visible de la cuvette de toilettes (5) est constituée d'une tôle métallique résistant à la corrosion ou pourvue d'un revêtement exempt de pores, résistant à la corrosion.

8. Ensemble de toilettes selon la revendication 1, **caractérisé en ce que** l'ensemble de toilettes comprend un dispositif de rinçage à liquide et la partie visible de la cuvette de toilettes (5) est raccordée au moyen d'un exutoire (8, 26) à un réservoir de fèces.

9. Ensemble de toilettes selon la revendication 8, **caractérisé par** un réservoir d'eau pure et/ou par un raccordement à de l'eau fraîche, par un dispositif de buses (21) raccordé au réservoir d'eau pure et/ou au raccordement d'eau fraîche (25), afin de rincer la cuvette de toilettes (5), le dispositif de buses (21) comportant au moins une pluralité de buses disposées dans la zone du bord supérieur de la cuvette de toilettes en position d'utilisation.

10. Ensemble de toilettes selon la revendication 9, **caractérisé en ce que** les buses disposées dans la zone du bord supérieur de la cuvette de toilettes (5) en position d'utilisation sont montées de façon isolée de l'insert (12) de la cuvette de toilettes (5) dans un couvercle en matière plastique (19).

11. Ensemble de toilettes selon au moins une des revendications précédentes 8 à 10, **caractérisé en ce qu'**un corps de clapet (9), en particulier un segment sphérique, est prévu à l'exutoire (8) de la cuvette de toilettes (5) pour la fermeture de l'exutoire (8).

12. Ensemble de toilettes selon au moins une des revendications précédentes 8 à 11, **caractérisé en ce que** le corps de base en matière plastique (2) recevant l'insert (12) repose en position d'utilisation sur une pièce de socle (6) en pouvant tourner autour de son axe vertical.

13. Ensemble de toilettes selon la revendication 12, **caractérisé en ce que** le corps de base en matière plastique (2) peut être bloqué sur la pièce de socle (6) au moyen d'un dispositif d'arrêt (22).

14. Ensemble de toilettes selon la revendication 11, **caractérisé en ce que** le corps de clapet (9) est posé dans la pièce de socle (6) de façon à pouvoir tourner autour d'un axe horizontal en position d'utilisation.

15. Ensemble de toilettes selon au moins une des revendications 12 à 14 en combinaison avec la revendication 9, **caractérisé en ce qu'**un dispositif d'alimentation en liquide de rinçage pouvant être commandé par un clapet (25) est prévu sur la pièce de socle (6), lequel est en communication avec le dispositif de buses (21) pour rincer la cuvette de toilettes (5).

16. Ensemble de toilettes selon la revendication 15 en combinaison avec la revendication 11, **caractérisé en ce qu'**un dispositif d'actionnement posé de façon à pouvoir basculer (24), en particulier un dispositif d'actionnement à pédale, est prévu sur la pièce de socle (6), avec lequel le dispositif d'alimentation en liquide de rinçage (25) et le segment sphérique (9) pour fermer la cuvette de toilettes (5) peuvent être actionnés simultanément.

17. Ensemble de toilettes selon au moins une des revendications précédentes 8 à 16, **caractérisé en ce que** la cuvette de toilettes (5) débouche par son extrémité inférieure en position d'utilisation dans l'exutoire (26) formé en entonnoir au moins dans sa zone supérieure.

18. Ensemble de toilettes selon au moins une des revendications précédentes 8 à 17, **caractérisé en ce que** l'exutoire (26) peut être relié, au choix, à une parmi plusieurs canalisations de raccordement (28,28') liées au réservoir de fèces et faisant un angle l'une par rapport à l'autre.
